Europäisches Patentamt

European Patent Office

Office européen des brevets

(19)

(11) Veröffentlichungsnummer : **0 191 885**
**B1**

(12) **EUROPÄISCHE PATENTSCHRIFT**

(45) Veröffentlichungstag der Patentschrift :
**06.07.88**

(21) Anmeldenummer : **85101961.2**

(22) Anmeldetag : **22.02.85**

(51) Int. Cl.⁴ : **A 45 C 13/00**, B 62 B 1/12,
A 45 C 3/04

(54) **Tasche.**

(43) Veröffentlichungstag der Anmeldung :
**27.08.86 Patentblatt 86/35**

(45) Bekanntmachung des Hinweises auf die Patenterteilung : **06.07.88 Patentblatt 88/27**

(84) Benannte Vertragsstaaten :
**AT CH DE FR GB IT LI NL**

(56) Entgegenhaltungen :
**CH-A- 546 549**
**FR-A- 430 488**
**FR-A- 1 139 105**
**GB-A- 883 470**
**US-A- 2 563 616**

(73) Patentinhaber : **LEIFHEIT Aktiengesellschaft**
**Leifheitstrasse**
**D-5408 Nassau/Lahn (DE)**

(72) Erfinder : **Liebscher, Johannes**
**Dr. Haupt Weg 3**
**D-5408 Nassau (DE)**

**Beschreibung**

Die Erfindung bezieht sich auf eine Tasche für einen Einkaufsroller gemäß dem Oberbegriff des Anspruchs 1.

Die Standardtaschen für auf dem Markt erhältliche Einkaufsroller bestehen zum größten Teil aus einem flexiblen Material aus Stoff mit innen angeordneten Versteifungseinlagen und einem versteiften Taschenkragen, wozu häufig nur Papperstreifen eingenäht werden oder das Taschenmaterial im Taschenkragenbereich doppelt vernäht wird. Teilweise übernimmt diese Verstärkung im Taschenkragenbereich aus eine über eine Kedernaht befestigte Verschlußklappe oder ein Reißverschluß. Dieser verstärkte Taschenkragenbereich nimmt dann auch die Griffe für die Tasche auf. Diese sind ebenfalls meistens angenäht beziehungweise angenietet. Zur Befestigung der Tasche an einem Rahmen des Eikaufsrollers ist häufig ein zusätzlicher Gurt an der Rückseite der Tasche angenäht (DE-GM 8 235 353).

Eine ähnliche Tasche ist aus der GB-A-883 470 vorbekannt.

Durch die US-A-2 563 616 ist eine beutelförmige Tasche bekannt, deren Öffnungsbereich über Kordeln zickzackartig verschließbar ist. Dieser Vorgang wird durch zwei vorgefaltete, auf die beiden Taschenseiten aufgesetzte streifenförmige Randverstärkungen, die ebenfalls mit Kordelöffnungen versehen sind, unterstützt. Jede dieser Randverstärkungen hat eine gegenüber der Taschenbreite kleinere Länge, so daß diese Verstärkungen im Abstand von den Taschenseitenrändern enden und somit zwischen sich zwei Taschenrandabschnitte freilassen, die nicht verstärkt sind und eingerissen werden können.

Aufgabe der Erfindung ist es, eine Tasche für Einkaufsroller zu fertigen, die bei ökonomischem Materialverbrauch für die Wandteile eine hohe Festigkeit und Formstabilität im Rand- bzw. Taschenöffnungsbereich bei leichter Handhabarkeit erreicht und einfach zu fertigen ist.

Diese Aufgabe wird mit den kennzeichnenden Merkmalen des Anspruchs 1 gelöst.

Durch die Ausführung des Taschenkragens aus Kunststoff kann dieser äußerst kostengünstig als Spritzgußteil mit allen notwendigen Zusatzelementen montagegünstig hergestellt werden ; er hat eine hohe mechanische sowie Formstabilität, ist dennoch über die Filmscharniere leicht zu falten und schützt den Taschenrand längs seines gesamten Umfanges, ohne daß ungeschützte Abschnitte vorhanden sind.

Zusätzlich können durch im Taschenkragen vorgesehene Rasteinrichtungen kostengünstig Zusatzteile an diese Rasteinrichtungen angefügt werden.

Durch das erfindungsgemäße Vorsehen der Anschlußendteile kann der Taschenkragen zweistückig ausgeführt und bequem zu einer durchgehenden Randverstärkung ergänzt werden, ohne daß ein Zweitwerkzeug erforderlich ist. Die beiden Teile sind gleich und werden mit ihren gegeneinander korrespondierenden Anschlußendteilen zusammengefügt.

Weitere Ausgestaltungen der Erfindung sind den Unteransprüchen zu entnehmen. So kann durch die besondere Gestaltung des Taschenkragens die Verbindung mit den Wandteilen sehr vereinfacht werden, so daß nähtechnisch nur geringe Anforderungen gestellt werden. Durch die Ausbildung des Taschenkragens mit einem Einschubschlitz für die Wandteile ist auch ein Verschweißen sehr leicht möglich.

Des weiteren ist zur Erhöhung der Steifigkeit am oberen Taschenkragenrand eine Führungsrippe vorgesehen. Diese kann auch gleichzeitig als Anschlag zum Einnähen eines Reißverschlusses dienen. Zum leichteren Falten der Tasche ist die Führungsrippe jeweils auf benachbarten Taschenkragenabschnitten um mindestens eine Führungsrippenbreite gegenüber der Führungsrippe der Front- beziehungsweise Rückwand versetzt. Zwei Ausführungsbeispiele der Erfindung werden im folgenden an Hand der Zeichnungen näher erläutert.

Es zeigen :

Figur 1 eine Ansicht eines Einkaufsrollers mit Tasche,

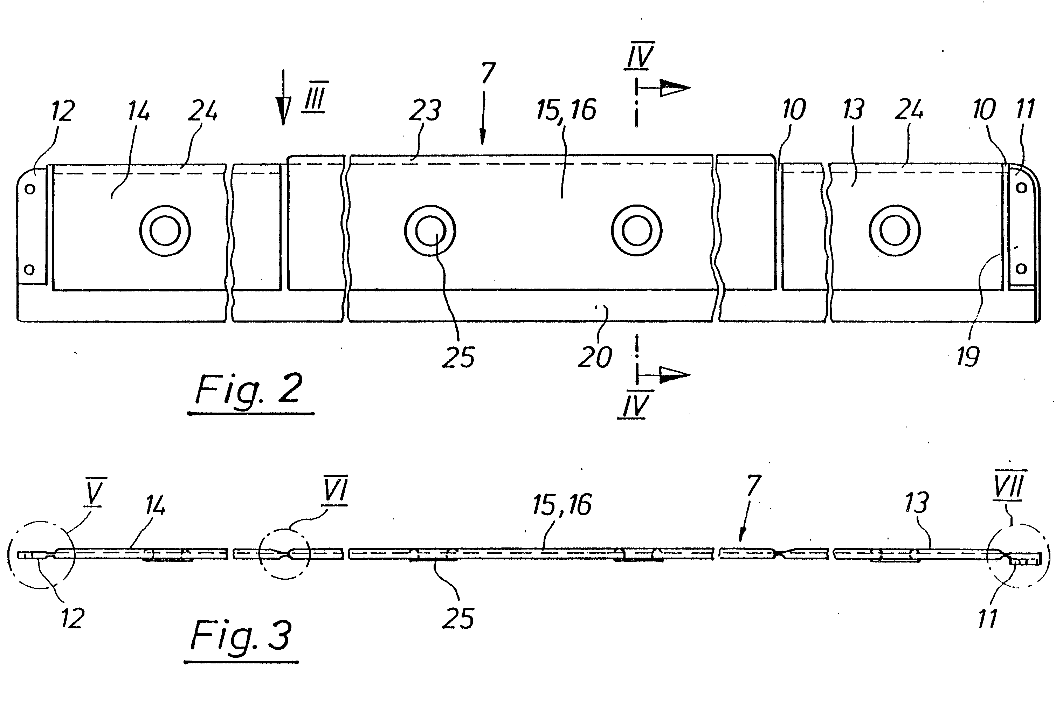

Figur 2 eine Ansicht eines Taschenkragenteiles, für einen Taschenkragen sind zwei derartige Teile erforderlich,

Figur 3 eine Draufsicht gemäß der Richtung III nach Figur 2,

Figur 4 einen Schnitt gemäß der Linie IV-IV nach Figur 2,

Figur 5 eine Ausschnittsvergrößerung gemäß V nach Figur 3,

Figur 6 eine Ausschnittsvergrößerung gemäß VI nach Figur 3,

Figur 7 eine Ausschnittsvergrößerung gemäß VII nach Figur 3,

Figur 8 eine Alternativlösung gemäß Figur 4,

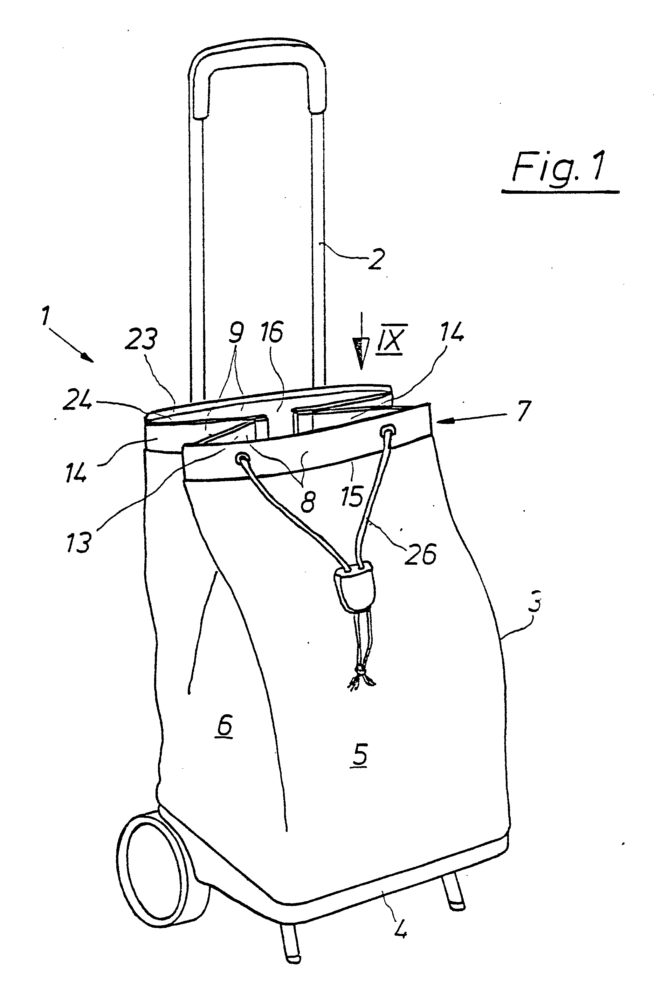

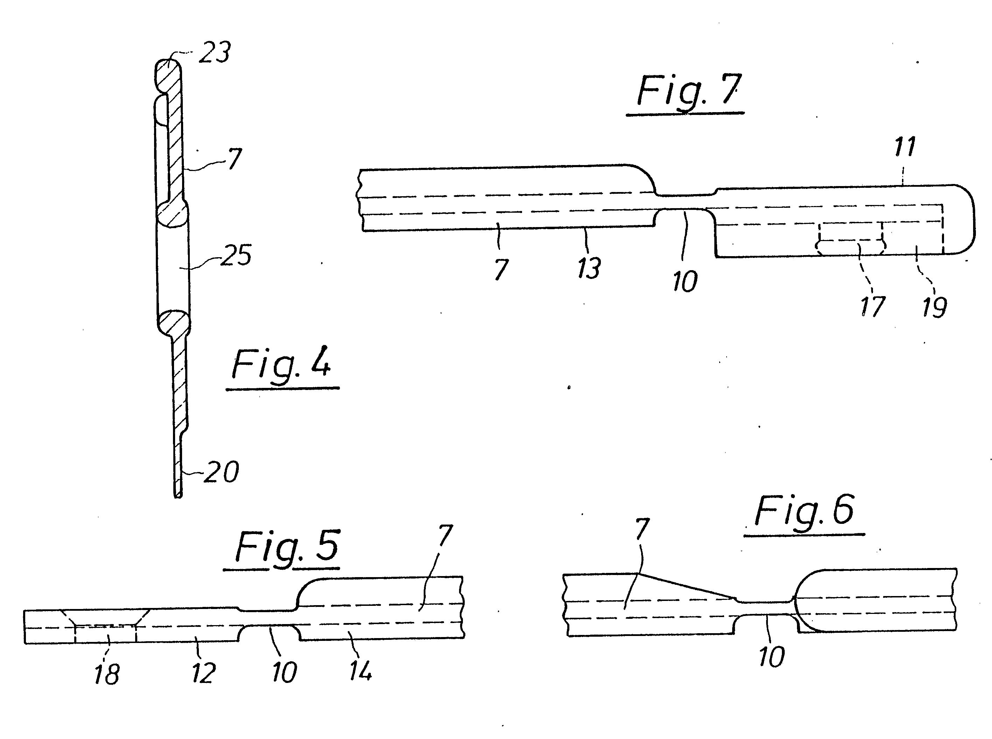

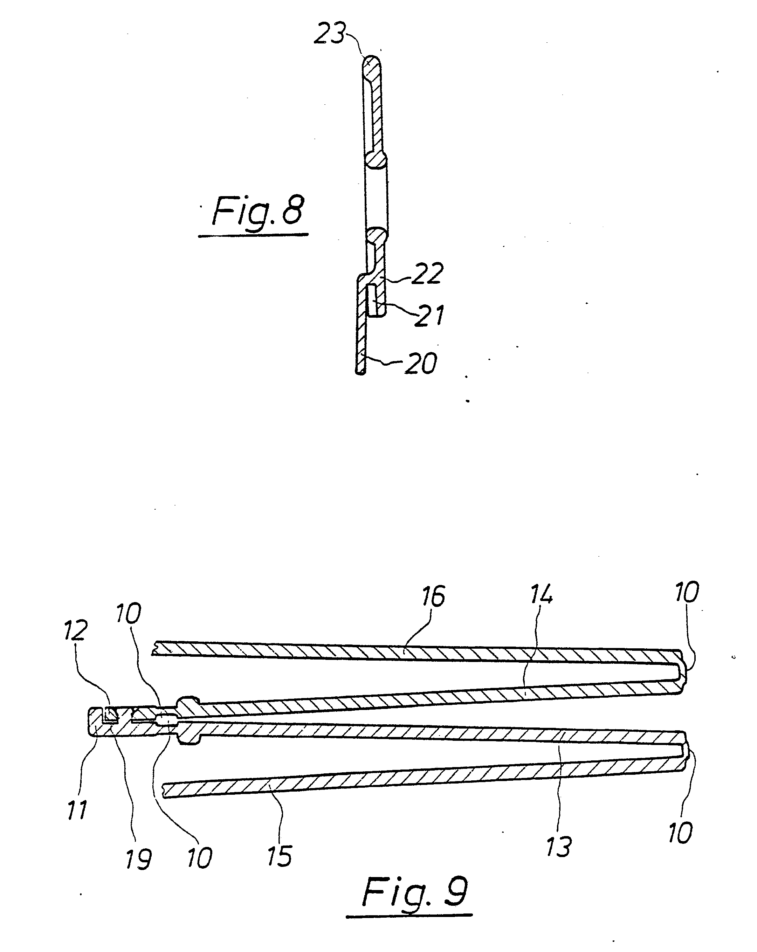

Figur 4 und Figur 9 eine vergrößerte Ansicht im Schnitt gemäß Richtung IX nach Figur 1.

An dem Rahmen 2 eines Einkaufsrollers 1 ist eine Tasche 3 gehalten. Die Tasche 3, aus flexiblem Material wie Stoff beziehungsweise Kunststoff kaschiertem Stoff gefertigt, besteht aus einem etwa rechteckigen Bodenteil 4, sich daran anschließenden Wandteilen 5, 6 und einem die Wandteile am oberen Abschlußbereich begrenzenden formsteifen Taschenkragen 7.

Das Taschenkragen 7 ist bei vorliegendem Ausführungsbeispiel aus zwei idenischen Teilen 8 und 9 zusammengesetzt. Jedes Teil 8, 9 ist durch vier Filmscharniere 10 in zwei Anschlußendteile 11 und 12, zwei Taschenkragenabschnitte 13 und 14 sowie einem Front- beziehungsweise Rückwandabschnitt 15, 16 unterteilt.

Das Anschlußendteil 11 ist dabei mit Rastpilzen 17 und das Anschlußendteil 12 mit damit korrespondierenden Rastöffnungen 18 versehen. Beim Zusammenfügen der beiden Teile 8 und 9 kommt das Anschlußendteil 12 in der Ausnehmung 19 des Anschlußendteiles 11 zu liegen.

Der Taschenkragen 7 ist weiter mit einem im Schnitt L-förmig abgesetzten Befestigungsstreifen 20 versehen.

In einer Ausgestaltungsform dazu ist gemäß Figur 8 ein zusätzlicher Einschubschlitz 21 für die Wandteile 5, 6 vorgesehen.

Mit 22 ist die Taschenkragenwand gekennzeichnet.

Des weiteren ist der Taschenkragen 7 am oberen Ende mit einer Führungsrippe 23 versehen. Diese dient einmal zur zusätzlichen Verstärkung, kann aber auch Anschlagleiste zum Anbringen eines Verschlußelementes, zum Beispiel eines Reißverschlusses, dienen. Auf den Taschenkragenabschnitten 13 und 14 ist die Führungsrippe 24 um Führungsrippen breite gegenüber der Führungsrippe 23 auf dem Frontbeziehungsweise Rückwandabschnitt 15, 16 versetzt.

Das weiteren ist der Taschenkragen 7 mit einer Anzahl Ösen 25 versehen, die sowohl zur Halterung der Tasche am Rahmen 2 als auch zur Aufnahme von einem Verschlußelement 26 oder einem Tragelement dienen können.

## Patentansprüche

1. Tasche für Einkaufsroller (1) aus flexiblem Material mit einem etwa rechteckigen Bodenteil (4), sich daran anschließenden Wandteilen (5, 6), einer Verstärkung im oberen Abschlußbereich und einer Einrichtung zur Halterung der Tasche an dem Rahmen (2) des Einkaufsrollers (1), dadurch gekennzeichnet, daß die Verstärkung aus einem mit den flexiblen Wandteilen (5, 6) an ihrem oberen Ende kraftschlüssig verbundenen formsteifen Taschenkragen (7) aus Kunststoff besteht, der zweistückig ausgebildet und mit jeweils gegeneinander korrespondierenden, steckbaren Anschlußendteilen (11, 12) versehen ist, die im gekuppelten Zustand einen längs der Taschenöffnung duchgehend verlaufenden Taschenkragen ergeben und welche jeweils durch ein Filmscharnier (10) mit dem zugehörigen benachbarten Taschenkragenabschnitt (13, 14) verbunden sind, daß an dem Taschenkragen einstückig die Einrichtung zur Halterung am Rahmen in Form von Ösen (25) angeformt sind, und daß der Taschenkragen (7) ferner zur Faltung der Tasche durch zumindest zwei weitere Filmscharniere (10) unterteilt ist.

2. Tasche nach Anspruch 1, dadurch gekennzeichnet, daß der Taschenkragen (7) auf der Seite der Wandteile mit einem L-förmig abgesetzen Befestigungsstreifen (20) versehen ist.

3. Tasche nach Anspruch 2, dadurch gekennzeichnet, daß zwischen dem Befestigungsstreifen und dem unteren Abschnitt (22) des Taschenkragens ein Einschubschlitz (21) für die Wandteile vorgesehen ist.

4. Tasche nach Anspruch 1 bis 3, dadurch gekennzeichnet, daß der Taschenkragen (7) durch sechs Filmscharniere (10) unterteilt ist.

5. Tasche nach einem der Ansprüche 1 bis 4, dadurch gekennzeichnet, daß der Taschenkragen (7) an seinem oberen Rand mit einer versteifenden Führungsrippe (23, 24) versehen ist.

6. Tasche nach Anspruch 5 mit Seitenfalten, dadurch gekennzeichnet, daß die Führungsrippe (24) auf den Taschenkragenabschnitten (13, 14) längs der Seitenfalten um mindestens eine Führungsrippenbreite gegenüber der Führungsrippe (23) des Front- beziehungsweise Rückwandabschnittes (15, 16) des Taschenkragens versetzt ist.

## Claims

1. Bag for a shopping trolley (1), made of flexible material and with an approximately rectangular bottom part (4), wall parts (5, 6) adjoining this, a reinforcement in the upper closing region, and a device for mounting the bag on the frame (2) of the shopping trolley (1), characterized in that the reinforcement consists of a dimensionally rigid plastic bag collar (7) which is connected non-positively to the flexible wall parts (5, 6) at their top end, is made in two parts and is equipped with mutually corresponding insertable connecting end parts (11, 12) which, in the coupled state, produce a bag collar extending continuously along the bag orifice and which are each connected by means of a film hinge (10) to the associated adjacent bag-collar portion (13, 14), in that the device for mounting on the frame is formed on the bag collar in one piece in the form of eyelets (25), and in that the bag collar (7) is also subdivided by at least two further film hinges (10) for the folding of the bag.

2. Bag according to Claim 1, characterized in that the bag collar (7) is equipped, on the same side as the wall parts, with a fastening strip (20) stepped in an L-shaped manner.

3. Bag according to Claim 2, characterized in that a push-in slot (21) for the wall parts is provided between the fastening strip and the lower portion (22) of the bag collar.

4. Bag according to Claims 1 to 3, characterized in that the bag collar (7) is subdivised by six film hinges (10).

5. Bag according to one of Claims 1 to 4, characterized in that the bag collar (7) is equipped with a stiffening guide rib (23, 24) at its top edge.

6. Bag according to Claim 5 with side folds, characterized in that the guide rib (24) on the bag-collar portions (13, 14) is offset along the side folds by the amount of at least one guide-rib width relative to the guide rib (23) of the front-wall or rear-wall portion (15, 16) of the bag collar.

## Revendications

1. Sac pour poussette à provisions (1) en matière souple muni d'une partie de fond sensiblement carrée (4), de parties de paroi (5, 6) attenantes à celle-ci, d'un renfort dans la zone de raccordement supérieure et d'un système pour la fixation de la poche sur l'armature (2) de la poussette à provisions (1), caractérisé en ce que le renforcement est constitué par un col de sac (7) en matière synthétique rigide de forme, relié par adhérence sur leurs extrémités supérieures, col de sac réalisé en deux parties et comportant respectivement des parties d'extrémité de raccordement enfichables (11, 12) correspondant entre elles, parties d'extrémité de raccordement qui, à l'état accouplé, forment un col de sac s'étendant de façon continue le long de l'ouverture du sac et qui respectivement sont reliées par une articulation pelliculaire 10 à la section de col de sac (13, 14) attenante respective, en ce que sur le col de sac est formé d'une seule pièce, le système destiné à la fixation sur l'armature en forme d'œillets (25) et en ce que le col de sac est de plus divisé par au moins deux autres articulations pelliculaire (10) pour le pliage du sac.

2. Sac selon la revendication 1, caractérisé en ce que le col de sac (7) est muni sur les côtés des parties de paroi d'une bande de fixation (20) apposée en forme de L sur le côté des parties de la paroi.

3. Sac selon la revendication 2, caractérisé en ce qu'entre la bande de fixation et la section inférieure (22) du col du sac, est prévue une encoche d'introduction (21) pour les parties de paroi.

4. Sac selon les revendications 1 à 3, caractérisé en ce que le col du sac (7) est subdivisé par six articulations pelliculaires (10).

5. Sac selon l'une des revendications 1 à 4, caractérisé en ce que le col du sac (7) est muni sur son bord supérieur d'une nervure de guidage de renforcement (23, 24).

6. Sac selon la revendication 5 muni de plis latéraux, caractérisé en ce que la nervure de guidage (24) sur les sections de col de sac (13, 14) est décalée le long des plis latéraux d'au moins une largeur de nervure de guidage par rapport à la nervure de guidage (23) de la section de paroi frontale ou arrière (15, 16) du col de sac.

Fig.1

0 191 885

Fig. 2

Fig. 3

Fig. 7

Fig. 4

Fig. 5

Fig. 6

23

7

25

20

11

7   13

10

17   19

18   12   10   14

7

7

10

0 191 885

3

23

_Fig.8_

22
21
20

16    14    10

12    10

_Fig. 9_

11    19    10    15    13    10